# EUROPEAN PATENT SPECIFICATION

(11) **EP 3 770 026 B1**
(45) Date of publication and mention of the grant of the patent: **30.11.2022**
(21) Application number: 20186816.3
(22) Date of filing: 20.07.2020
(51) Int. Cl.: B60R 21/213

(54) **AIRBAG UNIT WITH HANG TAG**
AIRBAGEINHEIT MIT HÄNGEETIKETT
UNITÉ D'AIRBAG À ÉTIQUETTE VOLANTE

(30) Priority: 26.07.2019 KR 20190091026
(43) Date of publication of application: 27.01.2021
(73) Proprietor: Autoliv Development AB, 447 83 Vårgårda (SE)
(72) Inventor: JUNG, Dae-Chang, 18497 Hwaseong-si Gyeunggi-do, Hwa Sung City (KR); JANG, Kyu-Sung, 18497 Hwaseong-si Gyeunggi-do, Hwa Sung City (KR); LEE, Seung-Jin, 18497 Hwaseong-si Gyeunggi-do, Hwa Sung City (KR)
(74) Representative: Schweiger, Johannes

(56) References cited:
- JP-A- 2009 078 620
- JP-A- 2013 209 011
- JP-A- 2015 105 036
- KR-A- 20080 008 112
- KR-A- 20110 037 610
- US-A1- 2008 224 452

## Description

### +TECHNICAL FIELD

The present disclosure relates to an airbag unit of a vehicle, and more particularly, to an airbag unit with a hang tag for temporarily fixing an airbag.

### BACKGROUND ART

In general, an airbag device of a vehicle is a safety device that protects an occupant by rapidly inflating an airbag by injecting a gas into the airbag according to a signal of an impact detection sensor upon vehicle collision.

Such an airbag device is installed in a steering wheel, a dashboard, a seat, a sidewall, etc. provided in a vehicle, and is inflated toward the front or side of an occupant upon collision of a vehicle, and protects the occupant.

That is, there may be provided in a vehicle a driver air-bag (DAG) and a passenger air-bag (PAB) for protecting occupants on front seats upon head-on collision, a side air-bag (SAB), a curtain air-bag (CAB) for protecting a side of an occupant upon broadside collision, and a near air-bag for protecting knees of an occupant, etc.

Recently, autonomous vehicles moving by themselves without drivers' driving are developing.

As the autonomous vehicles configured as described above do not require drivers to drive, all seats including a driver seat can freely rotate and an angle of a back of a seat can be adjusted to be horizontal by a tilting operation.

An occupant can adjust the angle of the back of the seat variously, and may rotate the seat and may have a meeting facing an occupant on a back seat.

Accordingly, it is impossible to apply a normal airbag device which is designed with reference to a posture of an occupant sitting on a seat facing forward to the autonomous vehicles.

A related-art airbag device is provided with a temporal fixing portion which is temporarily fixed by a temporal sewing method in order to control a deployment shape or a deployment speed of an airbag.

For example, patent document 1 presented below discloses a configuration of temporarily fixing an airbag cushion or a wrapper.

The temporal fixing portion is in a temporally sewed state in which both side panels forming the airbag come into contact with each other and have no gap therebetween, and is broken by a gas pressure when a gas is supplied to the airbag from an inflator upon vehicle collision.

To achieve this, the temporal fixing portion is configured to be easily broken by the gas pressure by making a thread used in temporal sewing thin and making a stitch count wide.

Patent document 2 discloses an airbag unit according to the preamble of claim 1.

### CITED REFERENCE

### Patent Document

(Patent Document 1) Korean Patent Registration No. 10-1070147 (published on September 8, 2016)
(Patent document 2) Korean Patent Application No. 10-0008112 A (published on January 23, 2008)

### DISCLOSURE OF INVENTION

### Technical Problem

As described above, since the related-art technology provides the temporal fixing portion formed in a temporal sewing method or applies a separate fixing means, there are problems that workability is reduced since the operation of temporarily sewing or the operation of installing a fixing means should be separately performed when the airbag is manufactured, and a manufacturing cost increases due to additional equipment for fixing the airbag such as a jig, etc.

An object of the present disclosure is to solve the above-described problems, and to provide an airbag unit with a hang tag which can temporarily fix both side panels of an airbag by using a hang tag, which is applied to clothes, etc., when the airbag is manufactured.

Another object of the present invention is to provide an airbag unit with a hang tag, which can prevent an occupant from injuring by the hang tag, by controlling a flying direction of the hang tag when an airbag is inflated and deployed.

Still another object of the present disclosure is to provide an airbag unit with a hang tag, which allows the hang tag to be easily mounted in an airbag and can prevent a damage or a breakage of the airbag when the hang tag is mounted.

### SOLUTION TO PROBLEM

To achieve the above-described objects, an airbag unit with a hang tag according to claim 1 is disclosed.

### ADVANTAGEOUS EFFECTS OF INVENTION

According to the airbag unit with the hang tag according to the present disclosure described above, the hang tag is applied to the airbag, so that there is an effect of forming a temporal fixing portion for making both side panels of the airbag abstain from being inflated or for temporarily maintaining the airbag in a bent or folded state.

In addition, according to the present invention, the flying direction of the hang tag is controlled such that the hang tag moves or flies in a direction opposite to an occupant when the airbag is deployed, and thus there is an effect that an injury of the occupant can be prevented due to collision with the hang tag.

In addition, according to the present invention, the body is made to rotate with reference to the first fixing portion when the hang tag is mounted in the airbag, so that the hang tag can be easily mounted, and there is an effect that a damage or a breakage of the airbag panel may be prevented in the process of mounting the hang tag.

### BRIEF DESCRIPTION OF DRAWINGS

FIG. 1 is a front view of an airbag unit with a hang tag according to the present disclosure;
FIG. 2 is a view of an operation state in which the airbag illustrated in FIG. 1 is inflated and deployed;
FIG. 3 is a front view of an airbag unit with a hang tag according to a first embodiment of the present disclosure;
FIGS. 4 and 5 are views of an operation state when the airbag illustrated in FIG. 3 is inflated and deployed;
FIGS. 6 and 7 are views illustrating a process of mounting the hang tag in an airbag according to the first embodiment of the present disclosure;
FIG. 8 is a view illustrating an example of a process of mounting a normal hang tag in an airbag;
FIG. 9 is a front view of an airbag unit with a hang tag according to a second embodiment of the present disclosure;
FIG. 10 is a view of an operation state when the airbag illustrated in FIG. 9 is inflated and deployed;
FIG. 11 is a front view of an airbag unit with a hang tag according to a third embodiment of the present disclosure;
FIGS. 12 and 13 are views of an operation state when the airbag illustrated in FIG. 11 is inflated and deployed;
FIG. 14 is a front view of an airbag unit with a hang tag according to a fourth embodiment of the present disclosure; and
FIG. 15 is a view of an operation state when the airbag illustrated in FIG. 14 is inflated and deployed.

### BEST MODE FOR CARRYING OUT THE INVENTION

Hereinafter, an airbag unit with a hang tag according to preferred embodiments of the present disclosure will be described in detail with reference to the accompanying drawings.

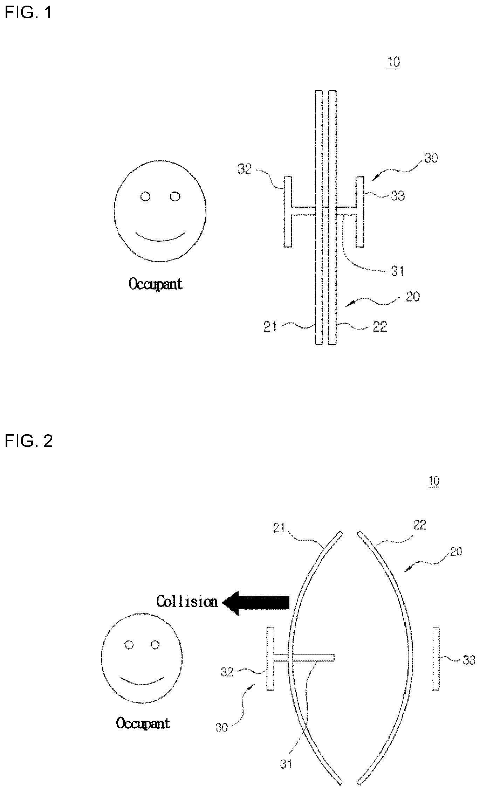

FIG. 1 is a front view of an airbag unit with a hang tag according to the present disclosure, and FIG. 2 is a view of an operation state in which the airbag illustrated in FIG. 1 is inflated and deployed.

In the following, terms, which indicates directions such as 'left side,' 'right side,' 'front,' 'rear,' 'upper direction,' and 'lower direction' are defined to indicate each direction based on state illustrated in each drawing.

In the following description, a direction facing an occupant with reference to the airbag is referred to as "inner side", and the opposite direction of the occupant is referred to as "outer side".

As shown in FIGS. 1 and 2, the airbag unit 10 with the hang tag according to the present disclosure includes an inflator (not shown) to generate a gas based on an impact detection signal upon vehicle collision, an airbag 20 which is inflated and deployed by receiving a gas from the inflator, and a hang tag 30 which partially and temporarily fix the airbag 20 and is provided to be broken when the airbag 20 is inflated and deployed.

The inflator may be provided to have an amount of generated gas, a supply speed, etc. which are pre-set according to collision characteristics of an occupant according to a result of an experiment of vehicle collision.

The airbag 20 may be formed in a bag shape with an inner panel 21 contacting an occupant and an outer panel 22 facing the outer side of the occupant in a sewing or one piece woven method.

An introduction portion (not shown) may be provided at one side of the airbag 20 to introduce a gas from the inflator, and the inflator may be connected to the introduction portion.

A temporal fixing portion for temporarily fixing the both side panels, that is, the inner panel 21 and the outer panel 22 being in contact with each other, may be formed in the airbag 20 to control a deployment shape or a deployment speed of the airbag 20.

Of course, the present disclosure is not necessarily limited hereto, and the temporal fixing portion may be formed in a bent or folded portion of the airbag.

The temporal fixing portion may be formed by the hang tag 30.

The hang tag 30 may be formed by applying a normal hang tag structure applied to clothes, etc.

For example, the hang tag 30 may include a body 31 passing through the both side panels 21, 22 of the airbag 20, and first and second fixing portions 32, 33 formed at both side ends of the body 31 orthogonally to the body 31, respectively.

It is illustrated that the first fixing portion 32 is disposed on an inner side of the inner panel 21 of the airbag 20 and the second fixing portion 33 is disposed on an outer side of the outer panel 22.

The body 31 and the first and second fixing portions 32, 33 may be integrally formed with one another by using a material of a synthetic resin having elasticity like plastic, so that the body and the first and second fixing portions are elastically deformable.

The hang tag 30 configured as described above may be partially broken when the airbag 20 is inflated and deployed, as shown in FIG. 2.

For example, when a connection portion between the body 31 and the second fixing portion 33 of the hang tag 30 is broken as shown in FIG. 2, and the first fixing portion 32 disposed on the inner side of the inner panel 21 of the airbag 20 and the body 31 fly toward the occupant and collides with occupant's eyes or face, etc., an injury of the occupant may be caused.

Accordingly a flying direction is controlled by selecting a portion of the hang tag to be broken, such that the hang tag does not fly toward the occupant.

### [First Embodiment]

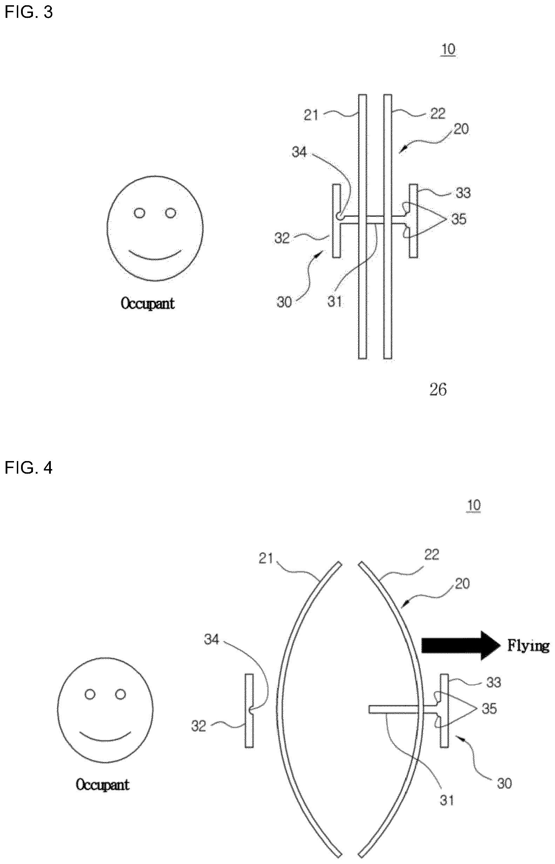

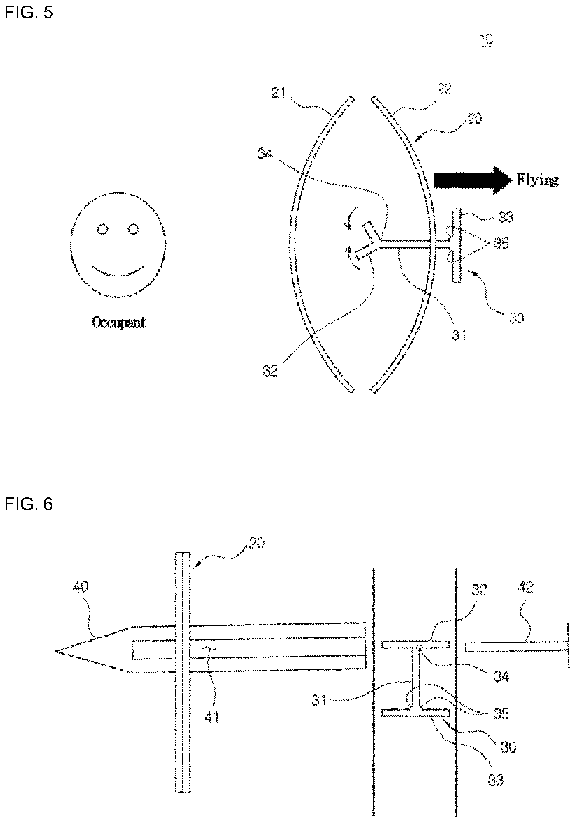

FIG. 3 is a front view of an airbag unit with a hang tag according to a first embodiment of the present disclosure, and FIGS. 4 and 5 are views of an operation state when the airbag illustrated in FIG. 3 is inflated and deployed.

As shown in FIG. 3, a notch 34 may be formed on a portion where the first fixing portion 32 disposed on the inner side of the inner panel 21 of the airbag 20 and the body 31 are connected to make the first fixing portion 32 and the body 31 easily broken when the airbag 20 is inflated and deployed.

In addition, a rib 35 may be formed on a portion where the second fixing portion 33 disposed on the outer side of the outer panel 33 of the airbag 20 and the body 31 are connected to reinforce a strength of the connection portion between the second fixing portion 33 and the body 31.

Although FIG. 3 depicts that the notch 34 and the rib 35 are formed in a spot shape, respectively, at a left side end and an upper portion and a lower portion of a right side end of the body 31, respectively, the present disclosure is not necessarily limited hereto, and the notch 34 and the rib 35 may be formed in an arc shape along outer circumferences of the left side end and the right side end of the body 31 in plural number, or may be formed in a ring shape.

As described above, the notch 34 is formed on the portion where the first fixing portion 32 disposed on the inner side of the inner panel 21 of the airbag 20 and the body 31 are connected, and the rib 35 is formed on the portion where the second fixing portion 33 disposed on the outer side of the outer panel 22 of the airbag 20 and the body 31 are connected, such that the first fixing portion 32 and the body 31 of the hang tag 30 are separated when the airbag 20 is inflated and deployed as shown in FIG. 4.

In addition, the body 31 and the second fixing portion 33 may move and fly in a direction opposite to the occupant together with the outer panel 22 of the airbag 20 while being connected to each other.

Alternatively, while the first fixing portion 32 is bent substantially in a right angle bracket shape ('>') in cross section by a gas pressure supplied to the airbag 20 as shown in FIG. 5, the hang tag 30 may move toward the outer side by passing through the inner panel 21.

Accordingly, the present disclosure controls the flying direction of the hang tag, such that the hang tag moves or flies in the direction opposite to the occupant, and thus an injury of the occupant can be prevented due to collision with the hang tag.

Although it is illustrated in the present embodiment that the notch 34 and the rib 35 are formed on portions where the body 31 and the first and second fixing portions 32, 33 are connected, respectively, the present disclosure is not necessarily limited hereto.

That is, the present disclosure may be changed such that the notch 34 is formed on the portion where the body 31 and the first fixing portion 32 are connected, and the rib 35 is not formed on the portion where the body 31 and the second fixing portion 33 are connected.

In addition, the present disclosure may be changed such that only the rib 35 is formed on the portion where the body 31 and the second fixing portion 33 are connected, and the notch 34 is not formed on the portion where the body 31 and the first fixing portion 32 are connected.

Next, a method for mounting the hang tag in the airbag will be described with reference to FIGS. 6 to 8.

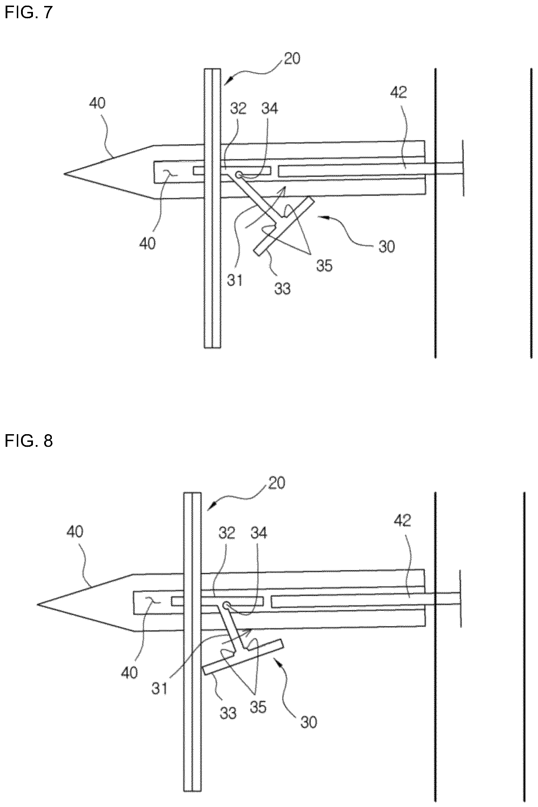

FIGS. 6 and 7 are views illustrating an example of a process of mounting the hang tag in the airbag according to the first embodiment of the present disclosure. FIG. 8 is a view illustrating an example of a process of mounting a normal hang tag in an airbag.

FIG. 6 illustrates that a needle having one side surface opened passes through the inner panel and the outer panel of the airbag, and FIG. 7 illustrates that the first fixing portion of the hang tag illustrated in FIG. 3 is made to pass through the inner side of the inner panel of the airbag by using a piston.

FIG. 8 illustrates that the first fixing portion of the hang tag without the notch formed thereon passes through the inner side of the inner panel of the airbag.

The needle 40 is formed in a needle shape to have a sharp leading end, and a disposition space 41 is formed inside the needle 40 to allow the first fixing portion 32 of the hang tag 30 to be disposed therein.

The needle 40 may have one side surface opened to communicate with the disposition space 41 formed therein.

As shown in FIG. 6, a worker disposes the needle 40 to pass through the inner and outer panels 21, 22 of the airbag 20, and disposes the first fixing portion 32 of the hang tag 30 in the disposition space 41 of the needle 40 and then presses the first fixing portion 32 into the inner side of the airbag 20 by using the piston 42.

In this case, since the notch 34 is formed on the first fixing portion 32 of the hang tag 30 according to the present embodiment, the body 31 may rotate in the counter clockwise direction to approach the right side end of the first fixing portion 32 as shown in FIG. 7.

On the other hand, the normal hang tag 30 without the notch 34 formed thereon has a limit to a rotation angle of the body 31 as shown in FIG. 8.

As described above, the present disclosure has the notch formed on the first fixing portion of the hang tag, so that the body can rotate about the first fixing portion when the hang tag is mounted in the airbag, and the hang tag can be easily mounted.

Accordingly, in the process of mounting the hang tag in the airbag, the present disclosure may prevent a damage or a breakage of the airbag panel.

### [Second Embodiment]

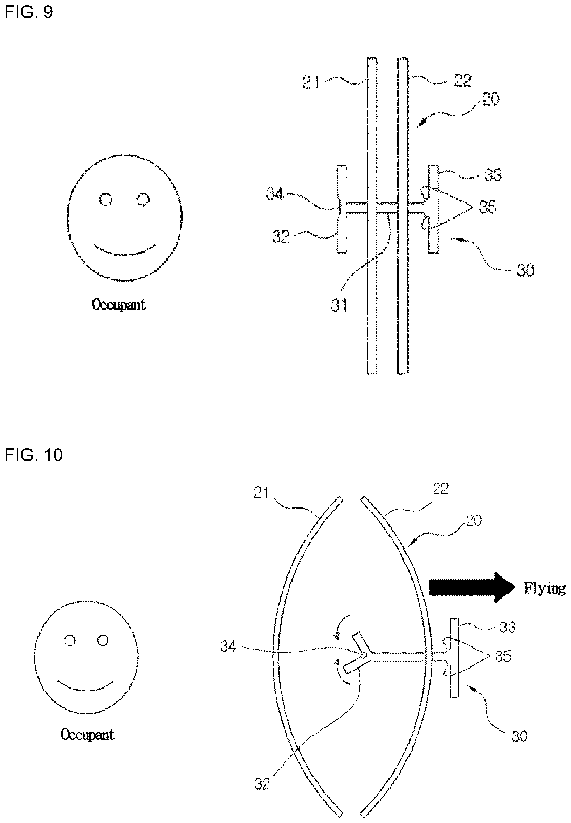

FIG. 9 is a front view of an airbag unit with a hang tag according to a second embodiment of the present disclosure, and FIG. 10 is a view of an operation state when the airbag illustrated in FIG. 9 is inflated and deployed.

As shown in FIG. 9, a notch 34 may be formed on a center portion of an inner surface of the first fixing portion 32, an outer surface of the first fixing portion 32 disposed on the inner side of the inner panel 21 of the airbag 20 that is connected with the body 31, that is, opposite to a right side surface.

In addition, a rib 35 may be formed on a portion where the second fixing portion 33 disposed on the outer side of the outer panel 22 of the airbag 20 and the body 31 are connected to reinforce a strength of the connection portion between the second fixing portion 33 and the body 31.

As described above, the notch 34 is formed on the inner surface of the first fixing portion 32 disposed on the inner side of the inner panel 21 of the airbag 20, and the rib 35 is formed on the portion where the second fixing portion 33 disposed on the outer side of the outer panel 22 of the airbag 20 and the body 31 are connected, such that the hang tag 30 may move toward the outer side by passing through the inner panel 21 while the first fixing portion 32 is bent substantially in a right angle bracket shape ('>') in cross section by a gas pressure supplied to the airbag 20 when the airbag 20 is inflated and deployed, as shown in FIG. 10.

Accordingly, the present disclosure controls the flying direction of the hang tag, such that the hang tag moves or flies in the direction opposite to the occupant, and thus an injury of the occupant can be prevented due to collision with the hang tag.

Although it is illustrated in FIGS. 9 and 10 that one notch 34 is formed on the center of the inner surface of the first fixing portion 32, the present disclosure is not necessarily limited hereto.

That is, the present disclosure may be changed such that one or more notches 34 are formed on various positions, such as an outer surface or an upper portion and a lower portion of the inner surface and the outer surface, etc., in addition to the center of the inner surface of the first fixing portion 32.

In addition, although the notch is formed on the connection portion between the first fixing portion and the body or the first fixing portion in the above-described embodiments, the present disclosure may be changed to provide a weak portion that is formed by one or more of a notch, an incision line, and a broken line formed in the hang tag 30 as dots, an arc, or a ring, and is thinner than other portions.

### [Third Embodiment]

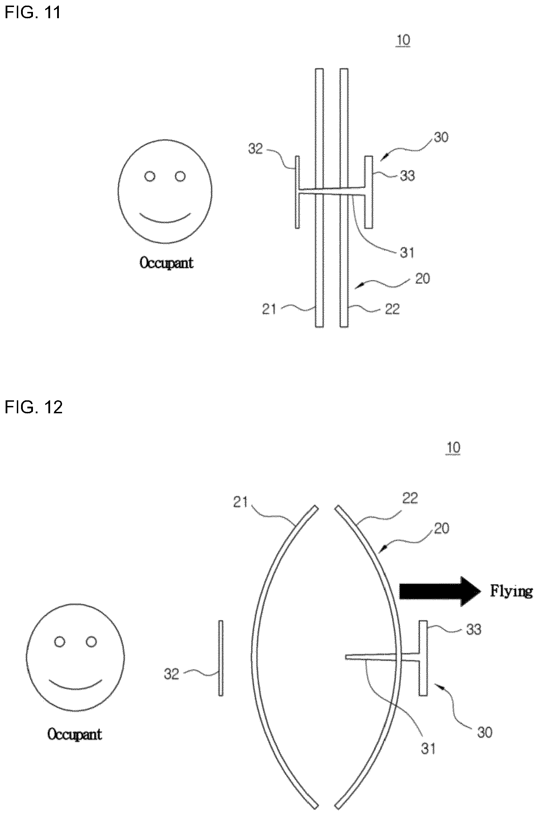

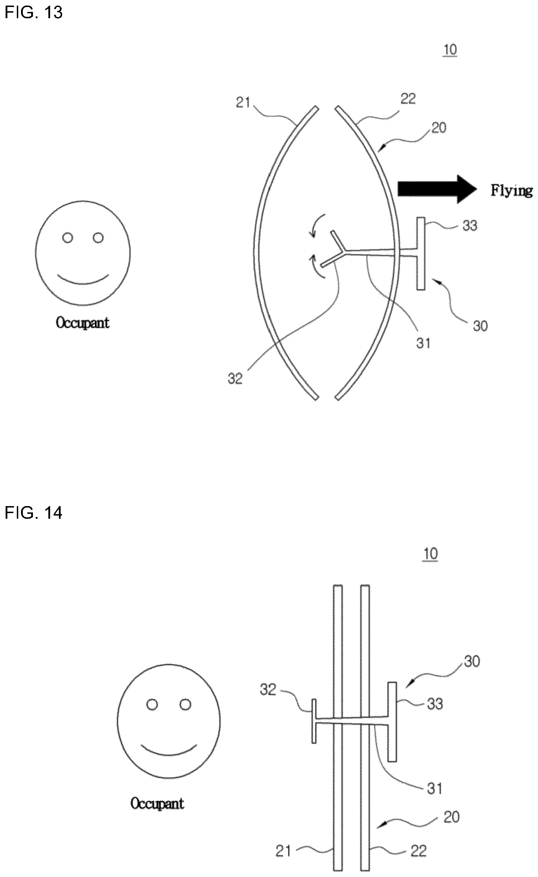

FIG. 11 is a front view of an airbag unit with a hang tag according to a third embodiment of the present disclosure, and FIGS. 12 and 13 are views of an operation state when the airbag illustrated in FIG. 11 is inflated and deployed.

As shown in FIG. 11, the body 31 of the hang tag 30 may be formed to have a thickness that is gradually reduced toward the occupant, that is, the inner side.

In addition, the first fixing portion 32 of the hang tag 30 may be formed to have a smaller thickness than that of the second fixing portion 33.

The body 31 of the hang tag 30 is formed to have the thickness that is gradually reduced toward the inner side from the outer side as described above, such that an inner end of the body 31 having a minimum thickness is separated from the first fixing portion 32 as shown in FIG. 12 when the airbag 20 is inflated and deployed.

Accordingly, the body 31 and the second fixing portion 33 of the hang tag 30 may move or fly in the direction opposite to the occupant together with the outer panel 22 of the airbag 20 while being connected to each other.

Alternatively, while the first fixing portion 32 which has the smaller thickness than that of the second fixing portion 33 is bent substantially in a right angle bracket shape ('>') in cross section as shown in FIG. 13, the hang tag may move toward the outer side by passing through the inner panel 21 of the airbag 20.

Accordingly, the present disclosure controls the flying direction of the hang tag, such that the hang tag moves or flies in the direction opposite to the occupant, and thus an injury of the occupant can be prevented due to collision with the hang tag.

Although it is illustrated in the present embodiment that the body 31 of the hang tag 30 is formed to have the thickness that is gradually reduced toward the inner side, and the first fixing portion 32 is formed to be thinner than the second fixing portion 33, the present disclosure is not necessarily limited hereto.

That is, the present disclosure may be changed such that the body 31 of the hang tag 30 is formed to have a thickness that is gradually reduced toward the inner side, and the first fixing portion 32 and the body 31 are separated when the airbag 20 is inflated and deployed, and the hang tag 30 is controlled to move or fly in the opposite direction of the occupant.

Alternatively, the present disclosure may be changed such that the first fixing portion 32 is formed to be thinner than the second fixing portion 33, and the first fixing portion 32 is bent when the airbag 20 is inflated and deployed, and the hang tag 30 is controlled to move in the opposite direction of the occupant.

### [Fourth Embodiment]

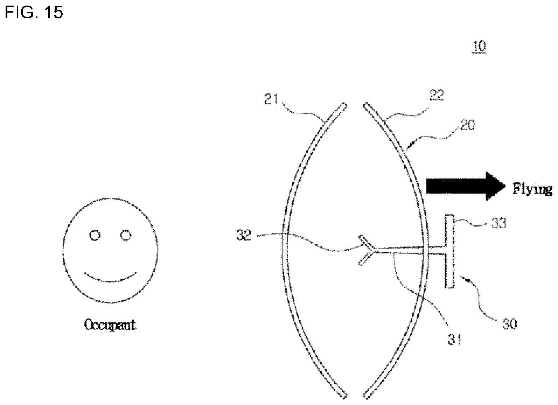

FIG. 14 is a front view of an airbag unit with a hang tag according to a fourth embodiment of the present disclosure, and FIG. 15 is a view of an operation state when the airbag illustrated in FIG. 14 is inflated and deployed.

As shown in FIG. 14, the first fixing portion 32 of the hang tag 30 may be formed to have a smaller thickness and a shorter length than those of the second fixing portion 33.

When the airbag 20 is inflated and deployed, the first fixing portion 32 formed to have the smaller thickness and the shorter length than those of the second fixing portion 33 as described above may be bent substantially in a right angle bracket shape ('>') in cross section when the airbag 20 is inflated and deployed, and may move toward the outer side by passing through the inner panel 21 of the airbag 20.

Accordingly, the present disclosure controls the flying direction of the hang tag, such that the hang tag moves or flies in the direction opposite to the occupant, and thus an injury of the occupant can be prevented due to collision with the hang tag.

The present disclosure may be changed such that the first fixing portion 32 is formed to have a longer length than that of the second fixing portion 33.

That is, the present disclosure has the first fixing portion and the second fixing portion formed to have different lengths according to an installation condition of the hang tag, so that a flying direction of the hang tag can be effectively controlled when the airbag is inflated and deployed.

In addition, the present disclosure may be changed to select two or more of the notch and rib configuration shown in FIGS. 3, 4, 8 to 10, the configuration of the hang tag formed to become thinner toward the inner side as shown in FIGS. 11 to 13, and the configuration of adjusting the thicknesses and the lengths of the first fixing portion and the second fixing portion as shown in FIGS. 14 to 15, and to complexly apply.

Although the invention is specifically described according to the above embodiments, the present invention is not limited to the above embodiments, and may be modified variously within a scope of the technical essence of the present disclosure.

### Industrial Applicability

The present disclosure is applied to technology that forms the temporal fixing portion by applying the hang tag to the airbag, and controls the flying direction of the hang tag such that the hang tag moves or flies in the direction opposite to the occupant when the airbag is deployed, and an injury of the occupant can be prevented due to collision with the hang tag.

**DRAWING REFERENCE NUMERALS**

| | | | |
|---|---|---|---|
| [0101] 10: | airbag unit with a hang tag | | |
| 20: | airbag | 21, 22: | inner, outer panels |
| 30: | hang tag | 31: | body |
| 32, 33: | first, second fixing portions | | |
| 34: | notch | 35: | rib |
| 40: | needle | 41: | disposition space |
| 42: | piston | | |

## Claims

1. An airbag unit (10) comprising:
an inflator for generating a gas based on an impact detection signal upon vehicle collision;
an airbag (20) inflated and deployed by receiving the gas from the inflator; and
a hang tag (30) for partially and temporally fixing the airbag (20), in which the hang tag (30) is broken and moves or flies in a direction opposite to an occupant when the airbag (20) is inflated and deployed, wherein the hang tag (30) comprises: a body (31) extending by passing through the airbag (20); and
first and second fixing portions (32, 33) which are formed at both side ends of the body (31) orthogonally to the body (31), respectively, and disposed on an inner side in contact with the occupant and an outer side opposite to the occupant, respectively, on the basis of the airbag (20), and
wherein the body (31) and the first and second fixing portions (32, 33) are integrally formed with each other by using a material having elasticity so that the body (31) and the first and second fixing portions (32, 33) are elastically deformable, **characterized in that**
the first fixing portion (32) has a thickness smaller than a thickness of the second fixing portion (33) disposed outside the airbag (20), and
when the airbag (20) is inflated and deployed, the hang tag (30) moves outward through an inner panel (21) of the airbag (20) while the first fixing portion (32), which is thinner than the second fixing portion (33), is bent and moves or flies in a direction opposite to the occupant together with an outer panel (22) of the airbag (20).

2. The airbag unit (10) of claim 1, wherein a weak portion is formed on the first fixing portion (32) to allow the first fixing portion (32) to be bent when the airbag (20) is inflated and deployed,
a rib (35) is provided at a connection portion between the body (31) and the second fixing portion (33) disposed outside the airbag (20) to reinforce a strength of the connection portion between the body (31) and the second fixing portion (33), and
the first fixing portion (32) is bent by the weak portion when the airbag (20) is inflated and deployed so that the hang tag (30) moves in a direction opposite to the occupant through an inner panel (21) of the airbag (20).

3. The airbag unit (10) of claim 2, wherein the weak portion is configured by at least one of a notch (34), an incision line, and a broken line formed in the hang tag as dots, an arc, or a ring, and is thinner than other portions.

4. The airbag unit (10) of claim 1, wherein
the first fixing portion (32) and the second fixing portion (33) have lengths that vary depending on an installation condition of the hang tag (30).

## Patentansprüche

1. Airbageinheit (10), umfassend:
einen Gasgenerator zum Erzeugen eines Gases basierend auf einem Aufpralldetektionssignal bei Fahrzeugkollision;
einen Airbag (20), der durch Aufnehmen des Gases aus dem Gasgenerator aufgeblasen und entfaltet wird; und
ein Hängeetikett (30) zum teilweisen und zeitlichen Fixieren des Airbags (20), wobei das Hängeetikett (30) gebrochen ist und sich in eine Richtung gegenüber einem Insassen bewegt oder fliegt, wenn der Airbag (20) aufgeblasen und entfaltet wird, wobei das Hängeetikett (30) umfasst: einen Körper (31), der sich dadurch ausdehnt, dass er den Airbag (20) passiert; und
erste und zweite Befestigungsabschnitte (32, 33), die jeweils an beiden Seitenenden des Körpers (31) orthogonal zum Körper (31) ausgebildet sind und auf einer Innenseite in Kontakt mit dem Insassen bzw. einer Außenseite gegenüber dem Insassen auf der Basis des Airbags (20) angeordnet sind, und
wobei der Körper (31) und der erste und zweite Befestigungsabschnitt (32, 33) unter Verwendung eines Materials mit Elastizität einstückig miteinander ausgebildet sind, sodass der Körper (31) und der erste und zweite Befestigungsabschnitt (32, 33) elastisch verformbar sind, **dadurch gekennzeichnet, dass**
der erste Befestigungsabschnitt (32) eine Dicke aufweist, die kleiner ist als eine Dicke des zweiten Befestigungsabschnitts (33), der außerhalb des Airbags (20) angeordnet ist, und
wenn der Airbag (20) aufgeblasen und entfaltet wird, sich das Hängeetikett (30) durch eine innere Platte (21) des Airbags (20) nach außen bewegt, während der erste Befestigungsabschnitt (32), der dünner ist als der zweite Befestigungsabschnitt (33), gebogen wird und sich zusammen mit einer äußeren Platte (22) des Airbags (20) in einer Richtung gegenüber dem Insassen bewegt oder fliegt.

2. Airbageinheit (10) nach Anspruch 1, wobei auf dem ersten Befestigungsabschnitt (32) ein schwacher Abschnitt ausgebildet ist, um zu ermöglichen, dass der erste Befestigungsabschnitt (32) gebogen wird, wenn der Airbag (20) aufgeblasen und entfaltet wird,
eine Rippe (35) an einem Verbindungsabschnitt zwischen dem Körper (31) und dem zweiten Befestigungsabschnitt (33) bereitgestellt ist, der außerhalb des Airbags (20) angeordnet ist, um eine Festigkeit des Verbindungsabschnitts zwischen dem Körper (31) und dem zweiten Befestigungsabschnitt (33) zu verstärken, und
der erste Befestigungsabschnitt (32) durch den schwachen Abschnitt gebogen wird, wenn der Airbag (20) aufgeblasen und entfaltet wird, sodass sich das Hängeetikett (30) in einer Richtung gegenüber dem Insassen durch eine innere Platte (21) des Airbags (20) bewegt.

3. Airbageinheit (10) nach Anspruch 2, wobei der schwache Abschnitt durch mindestens eine von einer Kerbe (34), einer Schnittlinie und einer gestrichelten Linie konfiguriert ist, die in dem Hängeetikett als Punkte, ein Bogen oder ein Ring ausgebildet ist, und dünner als andere Abschnitte ist.

4. Airbageinheit (10) nach Anspruch 1, wobei
der erste Befestigungsabschnitt (32) und der zweite Befestigungsabschnitt (33) Längen aufweisen, die in Abhängigkeit von einem Installationszustand des Hängeetiketts (30) variieren.

## Revendications

1. Unité de coussin de sécurité gonflable (10) comprenant :
un gonfleur pour générer un gaz sur la base d'un signal de détection d'impact lors d'une collision de véhicule ;
un coussin de sécurité gonflable (20) gonflé et déployé en recevant le gaz depuis le gonfleur ; et
une étiquette d'accrochage (30) pour fixer partiellement et temporairement le coussin de sécurité gonflable (20), dans laquelle l'étiquette d'accrochage (30) est rompue et se déplace ou vole dans une direction opposée à un occupant lorsque le coussin de sécurité gonflable (20) est gonflé et déployé, dans laquelle l'étiquette d'accrochage (30) comprend : un corps (31) s'étendant en passant à travers le coussin de sécurité gonflable (20) ; et
des première et deuxième parties de fixation (32, 33) qui sont formées au niveau de l'une et l'autre des extrémités latérales du corps (31) orthogonalement au corps (31), respectivement, et disposées sur un côté interne en contact avec l'occupant et un côté externe opposé à l'occupant, respectivement, sur la base du coussin de sécurité gonflable (20), et
dans laquelle le corps (31) et les première et deuxième parties de fixation (32, 33) sont formés d'un seul tenant les uns avec les autres en utilisant un matériau ayant une élasticité telle que le corps (31) et les première et deuxième parties de fixation (32, 33) sont élastiquement déformables, **caractérisée en ce que**
la première partie de fixation (32) a une épaisseur plus petite qu'une épaisseur de la deuxième partie de fixation (33) disposée à l'extérieur du coussin de sécurité gonflable (20), et
lorsque le coussin de sécurité gonflable (20) est gonflé et déployé, l'étiquette d'accrochage (30) se déplace vers l'extérieur à travers un panneau interne (21) du coussin de sécurité gonflable (20) alors que la première partie de fixation (32), qui est plus mince que la deuxième partie de fixation (33), est pliée et se déplace ou vole dans une direction opposée à l'occupant conjointement avec un panneau externe (22) du coussin de sécurité gonflable (20).

2. Unité de coussin de sécurité gonflable (10) selon la revendication 1, dans laquelle une partie faible est formée sur la première partie de fixation (32) pour permettre à la première partie de fixation (32) d'être pliée lorsque le coussin de sécurité gonflable (20) est gonflé et déployé,
une nervure (35) est fournie au niveau d'une partie de connexion entre le corps (31) et la deuxième partie de fixation (33) disposée à l'extérieur du coussin de sécurité gonflable (20) pour renforcer une résistance de la partie de connexion entre le corps (31) et la deuxième partie de fixation (33), et
la première partie de fixation (32) est pliée par la partie faible lorsque le coussin de sécurité gonflable (20) est gonflé et déployé de sorte que l'étiquette d'accrochage (30) se déplace dans une direction opposée à l'occupant à travers un panneau interne (21) du coussin de sécurité gonflable (20).

3. Unité de coussin de sécurité gonflable (10) selon la revendication 2, dans laquelle la partie faible est configurée par au moins une parmi une encoche (34), une ligne d'incision, et une ligne interrompue formée dans l'étiquette d'accrochage en tant que points, un arc, ou un anneau, et est plus mince que d'autres parties.

4. Unité de coussin de sécurité gonflable (10) selon la revendication 1, dans laquelle
la première partie de fixation (32) et la deuxième partie de fixation (33) ont des longueurs qui varient en fonction d'une condition d'installation de l'étiquette d'accrochage (30).
